# EUROPÄISCHE PATENTSCHRIFT

(11) **EP 4 480 657 B1**
(45) Veröffentlichungstag und Bekanntmachung des Hinweises auf die Patenterteilung: **12.11.2025**
(21) Anmeldenummer: 24172502.7
(22) Anmeldetag: 25.04.2024
(51) Int. Cl.: B27M 3/00

(54) **VERFAHREN ZUM HERSTELLEN VON MIT AUSSCHNITTEN VERSEHENEN BRETTSPERRHOLZPLATTEN UND HOLZPLATTENHERSTELLVORRICHTUNG**
METHOD FOR PRODUCING BOARD PLYWOOD PANELS PROVIDED WITH CUT-OUTS AND WOOD PANEL PRODUCTION DEVICE
PROCÉDÉ DE FABRICATION DE PANNEAUX DE BOIS LAMELLÉ-COLLÉS ET DISPOSITIF DE FABRICATION DE PANNEAUX DE BOIS

(30) Priorität: 19.06.2023 DE 102023116006
(43) Veröffentlichungstag der Anmeldung: 25.12.2024
(73) Patentinhaber: MINDA Industrieanlagen GmbH, 32423 Minden (DE)
(72) Erfinder: Zeddies, Dr. Hubertus, 30179 Hannover (DE); Begemann, Nils, 32547 Bad Oeyenhausen (DE)
(74) Vertreter: Gramm, Lins & Partner Patent- und Rechtsanwälte PartGmbB

(56) Entgegenhaltungen:
- EP-B1- 3 079 869
- DE-A1- 2 347 073
- US-A1- 2019 168 410

## Beschreibung

Die Erfindung betrifft ein Verfahren zum Herstellen von mit Ausschnitten versehenen Brettsperrholzplatten die aufgebaut sind, insbesondere bestehen aus, mindestens einer Längslage, in der die Bretter zueinander in Reihen parallel liegend in einer Längsrichtung angeordnet sind, und mindestens einer Querlage, in der die Bretter zueinander in Reihen parallel liegend in einer Querrichtung angeordnet sind. Gemäß einem zweiten Aspekt betrifft die Erfindung eine Holzplattenherstellvorrichtung.

Aus der EP 3 542 981 B1 ist eine Presse zum Verpressen und Verleimen von Holzbrettern zu laminierten Platten bekannt. Mit dieser Presse können u.a. auch Wandelemente aus Brettern hergestellt werden, die Ausschnitte für Fenster oder Türen aufweisen, und hierzu Bretter unterschiedlicher Länge nacheinander in die Fügeanlage eingeführt, dort positioniert und nach Abschluss der Positionierung miteinander verpresst werden. Die einzelnen Bretter verlaufen aber ausschließlich mit ihrer Längsachse in Längsrichtung der Platte.

Um eine ausreichende Stabilität eines Wandelementes zu erhalten, sollten mehrere Holzplatten zu einer Brettsperrholzplatte so miteinander verleimt werden, dass die Längsachsen der Bretter sich in übereinanderliegenden Holzplatten kreuzen, diese also abwechselnd parallel liegend in einer Längsrichtung und einer Querrichtung angeordnet sind. Beispielsweise verlaufen dabei die Längsachsen der Bretter in den äußeren Lagen in Querrichtung der Holzplatte und in der mindestens einen inneren Lage in Längsrichtung der Holzplatte. Grundsätzlich werden die einzelnen Platten zu einer Brettsperrholzplatte immer so miteinander verleimt, dass die Längsachsen der Bretter benachbarter Lagen sich kreuzen.

Die EP 3 795 315 B1 offenbart eine Presse, mit der Holzbretter beliebiger Breite und Länge zu laminierten Holzplatten beliebiger Breite und Länge kontinuierlich verleimt werden können, ohne dass die Oberfläche der laminierten Platten anschließend bearbeitet wird. Wenn es nicht darum geht, die Holzbretter zu Schichtplatten zu verleimen, ist die Fügeanlage als Querförderer zu verwenden.

Vorteilhaft ist es, Brettsperrholzplatten, die als Wandelemente im Hausbau verwendet werden sollen, direkt mit Fenster- und Türausschnitten herzustellen, weil dadurch Material eingespart und Abfall vermieden wird. Problematisch bei der Herstellung solcher Brettsperrholzplatten ist es, dass die Bretter für die Holzplatten einmal in ihrer Längsrichtung quer zur Längsrichtung der gewünschten Holzplatte (Querlage) und einmal in Längsrichtung der gewünschten Holzplatte gelegt (Längslage) und verleimt werden müssen. Dazu sind zwei unterschiedliche Fügeanlagen notwendig.

Die DE 10 2010 026 578 B4 zeigt ein Verfahren zum Herstellen einer Brettsperrholzplatte, bei dem zunächst eine Längslage aus Brettern gelegt wird, die in Längsrichtung der Brettsperrholzplatte ausgerichtet sind, so dass wenigstens eines der Bretter in Längsrichtung über die anderen Bretter hinausragt. Anschließend wird auf die erste Längslage eine erste Querlage aus Brettern gelegt, die in Querrichtung der Brettsperrholzplatte ausgerichtet sind. Danach werden die Lagen in Längsrichtung, in Querrichtung und in zu beiden Richtungen senkrechter Richtung verpresst.

Die EP 2 618 972 B1 offenbart ein Verfahren zur Herstellung von mehrlagigen Tafelelementen, bei dem die Bretter zur Bildung eines Ausschnittes unterschiedlich lang sind und entsprechend der Lage des Ausschnittes positioniert werden.

Die EP 1 369 214 B1 zeigt ein Verfahren zum Zusammenfügen mehrschichtiger Panele, bei dem die Positionen zum Vernageln der Bretter anhand der Brettbreiten der vorhergehenden Lage berechnet und die Nagelpositionen der nachfolgenden Reihe auf die darunterliegenden Bretter abgestimmt werden.

Die WO 2012/104100 A1 offenbart ein Verfahren zum Bestücken eines mehrlagigen Vollholz-Verbundbauteils mit mindestens einer Lage untereinander parallel orientierter, gegenüber den Brettern der vorangehenden Lage verschwenkter Bretter. Die Bretter werden nacheinander auf die oberste Lage aufgebracht und jeweils mit dieser oder der unter dieser liegenden Lage an einem stationären Portal vernagelt, bis eine Lage erreicht ist, auf welche die nächstfolgende Lage aufgebracht wird. Auch die EP 3 079 869 B, US 2019/168410 A und DE 23 47 073 A offenbaren Verfahren zum Herstellen von mit Ausschnitten versehenen Brettsperrholzplatten. Wobei die EP 3 079 869 B die Präambel des Hauptanspruches offenbart.

Der Erfindung liegt die Aufgabe zugrunde, sowohl die Längslage als auch die Querlage einer Brettsperrholzplatte auf derselben bzw. baugleichen Fügeanlage herzustellen.

Die Problemlösung erfolgt gemäß einem ersten Aspekt der Erfindung bei einem gattungsgemäßen Verfahren durch folgende Schritte:
a) in einem ersten Arbeitsgang werden zur Erzeugung der Ausschnitte in der Längslage die Bretter in den Reihen, in denen sich Ausschnitte befinden, in Einzelbretter aufgeteilt und anschließend zu einer ersten Längslage gelegt und an ihren Längsseiten miteinander verleimt,
b) in einem zweiten Arbeitsgang wird zur Erzeugung der Ausschnitte zunächst eine zweite Längslage aus einer Mehrzahl von Einzelbrettern gebildet, wobei zur Berücksichtigung der Ausschnitte in einigen Reihen Einzelbretter gelegt und an ihren Längsseiten miteinander verleimt werden, wodurch die zweite Längslage in Querrichtung abgestuft ausgebildet wird, wobei die Fläche der zweiten Längslage der Fläche der ersten Längslage ohne die Ausschnitte entspricht,
c) in einem dritten Arbeitsgang wird die zweite Längslage in mindestens zwei Teile aufgeteilt und die aufgeteilten Teile werden um 90° gedreht,
d) in einem vierten Arbeitsgang werden die um 90° gedrehten Teile zu der Querlage aneinander gelegt und so miteinander verbunden, dass auch hier die Ausschnitte gebildet werden,
e) in einem abschließenden Arbeitsgang werden die Querlage auf die Längslage aufgelegt und die übereinanderliegenden Lagen miteinander verleimt.

Mit diesen Schritten ist es möglich, die Längslage und die Querlage auf ein und derselben Fügestation oder auf zwei bauidentischen Fügestationen herzustellen, weil nur Längslagen gelegt und verpresst werden und die benötigten Querlagen dadurch erzeugt werden, dass eine zweite Längslage in mehrere Teilplatten aufgeteilt und die aufgeteilten Teile um 90° gedreht werden. Die Längsrichtung der Bretter in den einzelnen Lagen verläuft damit jeweils quer zu einander. Die Größe und Anzahl der notwendigen Teilplatten ist natürlich vorher zu berechnen. Es ist auch möglich, erhaltene Teilplatten nochmals aufzuteilen.

Die beiden äußeren Lagen einer Brettsperrholzplatte bestehen vorzugsweise ausschließlich aus miteinander verleimten Holzbrettern. In den inneren Lagen kann zwischen zwei Brettern jeweils eine Dämmplatte angeordnet werden. Die Dämmplatte kann breiter sein als die Bretter. In der Fügestation werden dann wechselweise Holzbretter und Faserplatter, bevorzugt Holzfaserplatten seitlich miteinander verleimt.

Vorzugsweise sind in einer Reihe maximal fünf Einzelbretter vorgesehen.

In einem Ausführungsbeispiel werden die Bretter in Längsrichtung an die Fügestation antransportiert und über verstellbare Anschläge positioniert. Nach der Positionierung werden sie in Querrichtung - also quer zu ihrer Längsachse - in die Fügestation eingeschoben.

Vorteilhaft ist es, wenn die fertig verleimte Brettsperrholzplatte, bevor sie weiterverarbeitet wird, an ihren Seitenrändern besäumt wird, um sie zu kalibrieren und damit das gewünschte Endformat zu erreichen.

An zwei gegenüberliegenden Seitenrändern (auf der Zeichnung rechts und links, bzw. in Längsrichtung am Anfang und am Ende) werden die Längslagen, die später als Querlagen verwendet werden sollen, vorzugsweise von Vollholz, also von Brettern, begrenzt, wenn Faserplatten dazwischen gelegt werden.

Gemäß einem zweiten Aspekt löst die Erfindung das Problem durch eine Holzplattenherstellvorrichtung zum Herstellen von mit Ausschnitten versehenen Brettsperrholzplatten, die aufgebaut sind aus mindestens einer Längslage, in der die Bretter zu einander in Reihen parallel liegend in einer Längsrichtung angeordnet sind, und mindestens einer Querlage, in der die Bretter zu einander in Reihen parallel liegend in einer Querrichtung angeordnet sind, mit
a) einer Abtrenneinrichtung, die eingerichtet ist zum Aufteilen der Bretter in den Reihen, in denen sich Ausschnitte befinden, in Einzelbretter zur Erzeugung der Ausschnitte in der Längslage,
b) einer Beleimeinrichtung, die eingerichtet ist zum Beleimen der Längsseiten der Bretter,
c) einer Fügestation zum Legen und Verpressen der Bretter zu einer ersten Längslage,
d) wobei die Abtrenneinrichtung eingerichtet ist zum Aufteilen einer in Querrichtung RQ abgestuften zweiten Längslage, deren Fläche der ersten Längslage ohne die Ausschnitte entspricht, in mindestens zwei Teilplatten,
e) wobei die Holzplattenherstellvorrichtung eine Dreheinrichtung aufweist, die eingerichtet ist zum Drehen der aufgeteilten Teilplatten um 90°,
f) wobei die Fügestation eingerichtet ist, die um 90° gedrehten Teilplatten zu der Querlage aneinanderzulegen und so miteinander zu verbinden, dass auch hier die Ausschnitte gebildet werden.

Die Abtrenneinrichtung ist beispielsweise ein Fräser oder eine Säge, insbesondere eine Kappsäge oder eine Kreissäge.

Die Dreheinrichtung ist beispielsweise ein Drehkipptisch, ein Drehwender, eine Drehklappe, ein Drehkarussell, ein Greifer, ein Heber, insbesondere ein Vakuumsauger oder ein Vakuumheber, oder ein Handhabungsroboter.

Vorzugsweise weist die Holzplattenherstellvorrichtung eine Vereinigungseinrichtung aufweist, die eingerichtet ist, die Querlage Q auf die Längslage L aufzulegen und die übereinanderliegenden Lagen miteinander zu verleimen. Bevorzugt weist die Fügestation die Vereinigungseinrichtung auf, alternativ dazu ist sie als separate Einrichtung ausgebildet.

Bevorzugt weist die Holzplattenherstellvorrichtung eine Längslagenbildungseinrichtung auf, die eingerichtet ist zum Bilden der zweiten Längslage aus einer Mehrzahl von Einzelbrettern in mehreren Reihen zur Erzeugung der Ausschnitte, wobei zur Berücksichtigung der Ausschnitte in einigen Reihen Einzelbretter gelegt und an ihren Längsseiten miteinander verleimt werden, wodurch die zweite Längslage in Querrichtung R_{Q} abgestuft ausgebildet wird, wobei die Fläche der zweiten Längslage der Fläche der ersten Längslage ohne die Ausschnitte entspricht. Vorzugsweise weist die Fügestation die Längslagenbildungseinrichtung auf. In diesem Fall wird die zweite Längslage in der gleichen Einrichtung hergestellt, in der sie später als Querlage erneut zusammengesetzt wird. Alternativ dazu ist die Längslagenbildungseinrichtung separat ausgebildet.

In einer bevorzugten Ausgestaltung weist die Holzplattenherstellvorrichtung eine Transporteinrichtung auf, die eingerichtet ist zum Antransportieren der Bretter in Längsrichtung an die Fügestation und verstellbare Anschläge zum Positionieren der Bretter aufweist, und eine Schiebeeinrichtung, die eingerichtet ist zum Einschieben der Bretter in Querrichtung in die Fügestation nach der Positionierung. Die Transporteinrichtung ist beispielsweise eine Elektropalettenbahn, ein Fahrzeug, insbesondere ein autonomes Fahrzeug, ein Aufzug, ein Schachtförderer, eine Hängebahn, eine Pendelseilbahn, eine Trolleybahn, ein Schienenförderer, eine Rollenbahn, ein Gurtbandförderer, ein Kettenförderer oder ein Unterflur-Schleppkettenförderer. Die Schiebeeinrichtung ist beispielsweise ein Schieber, insbesondere ein mechanischer, pneumatischer oder hydraulischer Schieber.

Vorzugweise weist die Holzplattenherstellvorrichtung eine Besäumeinrichtung auf, die eingerichtet ist zum Besäumen der Brettsperrholzplatten bevor sie weiterbearbeitet werden, um sie zu kalibrieren. Die Besäumeinrichtung ist beispielsweise ein Fräser oder eine Säge, insbesondere eine Kreissäge.

Vorzugsweise ist die Fügestation dazu eingerichtet, zwischen den Brettern für die Querlage jeweils eine Dämmplatte anzuordnen. Bevorzugt sind die Dämmplatten breiter als die Bretter.

Vorzugsweise weist die Holzplattenherstellvorrichtung eine Steuereinrichtung auf, die eingerichtet ist zum Ansteuern der Längslagenbildungseinrichtung der Abtrenneinrichtung, der Transporteinrichtung, der Beleimeinrichtung, der Fügestation, der Dreheinrichtung, der Schiebeeinrichtung, der Besäumeinrichtung, der Dreheinrichtung und/oder der Vereinigungseinrichtung, sodass die Holzplattenherstellvorrichtung automatisch das erfindungsgemäße Verfahren durchführt.

Mithilfe einer Zeichnung soll ein Ausführungsbeispiel der Erfindung nachfolgend näher beschrieben werden. Es zeigen:
- Figur 1: eine Längslage für eine Brettsperrholzplatte;
- Figur 2: eine Querlage für eine Holzwerkstoffplatte;
- Figur 3a: die schematische Darstellung des Anordnens der Bretter in einer zweiten Längslage zur Bildung einer Querlage und die Bearbeitungsschritte dazu;
- Figur 3b: die schematische Darstellung des Anordnens der Bretter in einer zweiten Längslage zur Bildung einer Querlage und die Bearbeitungsschritte dazu;
- Figur 4: die schematische Darstellung des Ablaufs zum Fügen der Bretter;
- Figur 5: die Positionierung von fünf Brettern unterschiedlicher Länge und Position in einem Weg-Zeit-Diagramm;
- Figur 6: eine schematische Darstellung der Positionierung der Bretter in der Fügestation.

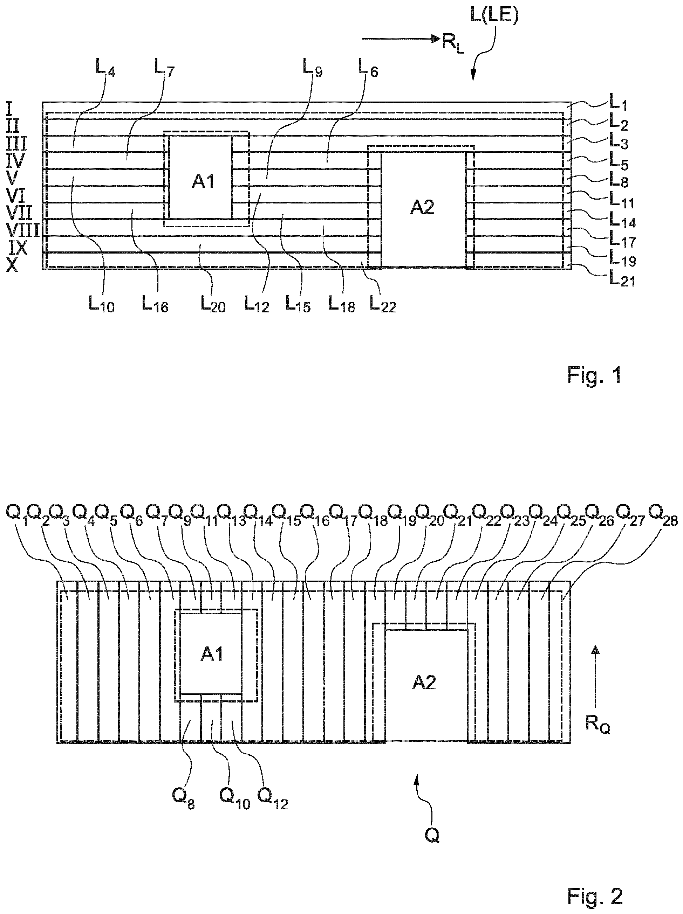

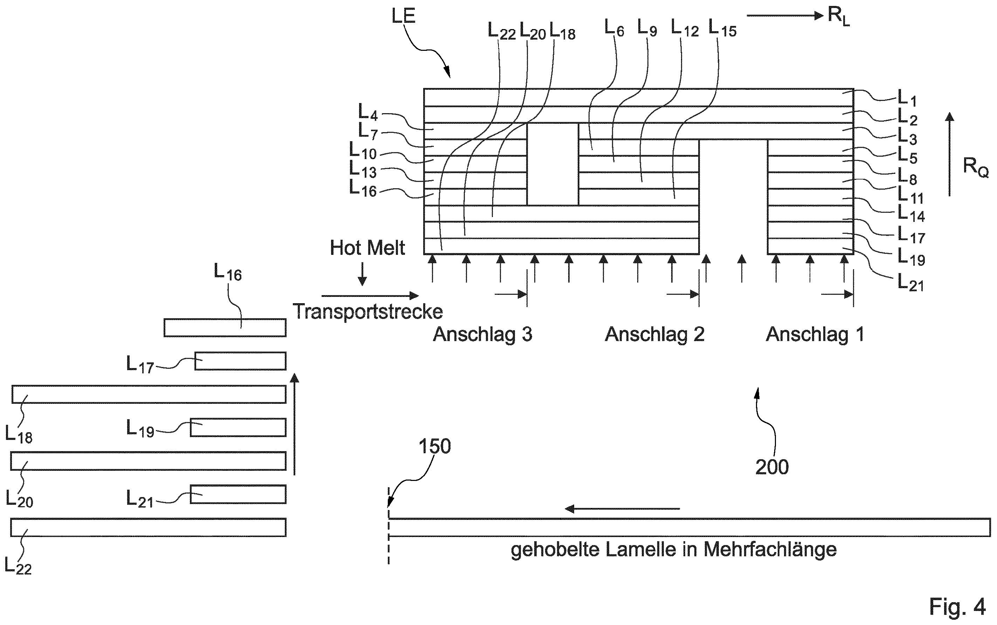

Figur 1 zeigt eine Längslage L die sich aus einer Mehrzahl von Brettern L₁, L₂, ...Lᵢ, ... L₂₁, L₂₂ zusammensetzt, die in Reihen I, II, III, IV, ... X angeordnet und miteinander verklebt sind. In der Längslage L sind ein Ausschnitt A₁ für ein Fenster und ein Ausschnitt A₂ für eine Tür vorgesehen. Figur 4 entspricht der Darstellung nach Figur 1 und lässt erkennen, dass zunächst das erste, ungekürzte Brett L₁ in die Fügeanlage eingefahren und bis zum Anschlag 1 vorgeschoben wird.

Dann wird das zweite, ungekürzte Brett L₂ an der dem ersten Brett L₁ zugewandten Längskante mit Leim, vorzugsweise einem Hotmelt, bestrichen, in die Fügeanlage 1 eingeschoben, bis zum Anschlag 1 transportiert und dann in Querrichtung R_{Q} gegen das erste Brett L₁ geschoben und mit diesem verpresst. Durch die Berührung des Hotmelts mit der Längskante des ersten Brettes L₁ härtet dieser schnell aus und fixiert die beiden Bretter L₁, L₂ aneinander.

Um den Fensterausschnitt A₁ zu beginnen, ist das nächste Brett L₃ kürzer ausgebildet. Es wird an seiner dem zweiten Brett L₂ zugewandten Seitenkante beleimt, bis zum Anschlag 1 in die Fügeanlage gefördert, dann in Querrichtung R_{Q} gegen das zweite Brett L₂ verschoben und mit diesem über den Hotmelt verbunden.

Das vierte Brett L₄ ist noch kürzer ausgebildet und wird, nachdem es zunächst an seiner dem dritten Brett L₃ zugewandten Seitenkante beleimt wurde, bis zum Anschlag 3 in die Fügeanlage eingefördert und dann in Querrichtung R_{Q} gegen das Brett L₂ verschoben und mit diesem verbunden. Entsprechend werden die nächsten gekürzten Bretter Ls, L₆ zur Bildung des ersten Teiles des Türausschnittes A₂, bis L₂₁ und L₂₂ beleimt, gegen den Anschlag 1, Anschlag 2 oder Anschlag 3 in die Fügeanlage eingefahren und in Querrichtung zur Verbindung mit einem oder den zuvor verklebten Brettern Lᵢ verbunden. Somit ist eine Längslage L hergestellt.

Praktischerweise werden die Bretter Lᵢ einer Reihe I, II,... IX, X) erst positioniert und dann gemeinsam gegen die bereits gelegten Bretter verschoben. Das heißt, dass beispielsweise in Reihe IV das Brett L₅ zunächst gegen Anschlag 1, das Brett L₆ gegen Anschlag 2 und das Brett L₇ gegen Anschlag 3 transportiert werden und dann alle drei Bretter L₅, L₆, L₇ gemeinsam gegen die bereits in Reihe III gefügten Bretter L₃ und L₄ geschoben und zum Fixieren verpresst werden (vgl. Figur 4). Die Anschläge 1, 2 und 3 sind in Längsrichtung R_{L} verschiebbar angeordnet, um eine hohe Variabilität für die einzubringenden Ausschnitte A₁, A₂ zu haben. Auch können noch weitere Anschläge vorgesehen sein, wenn es gewünscht ist, weitere Ausschnitte Aᵢ vorzusehen.

Um ein stabiles Wandelement zu erhalten, muss eine Brettsperrholzplatte hergestellt werden, und eine Querlage Q mit der Längslage L mittelt Holzleimes verklebt und verpresst werden. Dabei müssen die Ausschnitte A₁ und A₂ natürlich an derselben Stelle vorgesehen sein. Durch den Türausschnitt A₂ kann die Brettsperrholzplatte beim Transport zur Baustelle instabil werden. Um ein Brechen oder Anreißen zu vermeiden, könnten die Bretter L₂₁ und L₂₂ als ein einziges langes Brett ausgeführt werden und der Türausschnitt dann erst durch Zertrennen dieses letzten Brettes auf der Baustelle fertiggestellt werden.

Die mit der Längslage L zu verklebende Querlage Q ist Figur 2 entnehmbar. Hier sind Bretter Q₁, Q₂, Q₃, ... Qᵢ ... Q₆, Q₇, Q₈ mit ihrer Längsachse parallel zur Querrichtung R_{Q} miteinander verleimt. Aufgrund der Ausrichtung der Bretter Qᵢ kann die Querlage Q nicht unmittelbar in derselben Fügeanlage hergestellt werden, wie die Längslage L, was aus einem Vergleich der Figuren 1 und 2 deutlich ersichtlich ist, da die Bretter in unterschiedliche Richtungen geführt werden müssen.

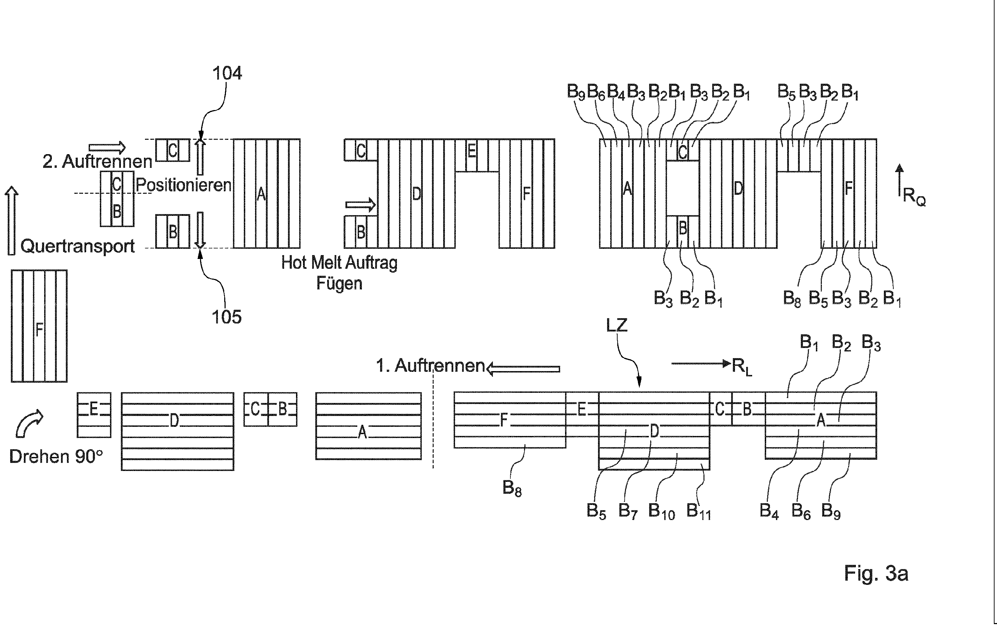

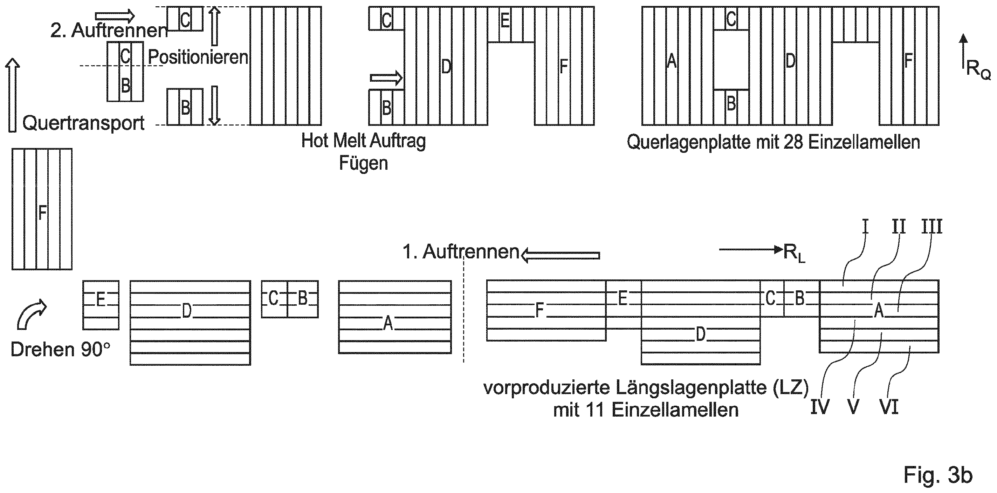

Wie die Querlage Q erzeugt wird, zeigen die Abbildungen in Figur 3a und 3b die (beginnend rechts unten und endend rechts oben) hintereinander betrachtet den Ablauf der Herstellung aufzeigen. Figuren 3a und 3b sind an sich identisch. Zur Verbesserung der Übersichtlichkeit enthalten sie nur andere Bezugszeichen.

Zunächst wird eine zweite Längslage LZ in einer nicht gezeigten Längslagenbildungseinrichtung hergestellt mit Brettern Bᵢ, die mit ihren Längsachsen in Längsrichtung R_{L} ausgerichtet sind. Die Herstellung erfolgt so, wie zuvor beschrieben. Beispielsweise kann die Fügestation 200 die Längslagenbildungseinrichtung aufweisen, sodass die zweite Längslage LZ in der gleichen Einrichtung gefertigt wird, in der sie später als Querlage Q erneut zusammengesetzt wird.

Die drei oberen Bretter B₁, B₂, B₃ in den Reihen I, II, III reichen über die volle Länge. Die Bretter B₄ bis B₁₁ in den Reihen IV, V, VI sind hingegen kürzer ausgebildet, sodass sich in Längsrichtung R_{L} eine abgestufte Platte ergibt.

An der fertigen Holzplatte (Abbildung rechts oben) lässt sich erkennen, dass zur Bildung der Ausschnitte A₁, A₂ unterschiedlich große Platten A, B, C, D, E, F aneinander angesetzt und miteinander verklebt werden können. Die Größe der Platten B und C und E lassen sich aus der Größe der zu erzeugenden Ausschnitte A₁, A₂ berechnen. Ebenso lassen sich die Größen der Platten A, D und F berechnen. Entsprechend werden die Bretter B₁, B₂, ... Bᵢ,... B₁₀, B₁₁ mit einer Abtrenneinrichtung 150, beispielsweise in Gestalt einer Kappsäge zurechtgesägt und so gelegt, dass sich aus der gelegten Holzplatte kleinere Teilplatten A, B, C, D, E und F ausschneiden lassen, was in der Abbildung unten links ersichtlich ist.

Im Übergang von den unteren zu den oberen Abbildungen werden die aufgeteilten Platten um 90° gedreht. Hier wird die Platte F, die am hinteren Ende der gelegten Holzplatte abgetrennt wurde, als erstes gedreht, in Querrichtung R_{Q} transportiert und positioniert, indem sie gegen einen Anschlag geführt wird, der nicht sichtbar ist. Sodann wird die Teilplatte E um 90° gedreht, an ihrer dann auf ihrer in der Zeichnung rechten Seitenkante mit Hotmelt beleimt und in Querrichtung R_{Q} transportiert und gegen die bereits positionierte Teilplatte F geschoben und mit ihr verpresst. In derselben Weise werden die Teilplatten D, C/B und A jeweils um 90° gedreht, ggf. in Querrichtung R_{Q} positioniert und mit der beleimten Seitenkante an die bereits positionierte Teilplatte angefügt.

Wie aus Figur 3 in den unteren Abbildungen ersichtlich ist, werden die Teilplatten B/C nicht aufgeteilt, sondern gemeinsam um 90° gedreht und dann in Querrichtung R_{Q} transportiert. Weil diese beiden Teilplatten B, C zu klein sind, ist es sinnvoller, sie erst nach der Drehung um 90° aufzutrennen und dann gegen Anschläge 104, 105 zu positionieren, um den Sturz (Teilplatte C) und die Brüstung (Teilplatte B) des Fensterausschnitts A₁ zu bilden. Am Ende ergibt sich die Darstellung der Querlage Q, wie sie in der Abbildung oben rechts der Figur 3a ersichtlich ist. Aus elf Brettern Bᵢ, die zu der zweiten Längslage LZ gelegt und verklebt wurden, werden durch die mehrfache Aufteilung 28 Bretter (Q₁, Q₂, ... Q₂₈) in der Querlage Q.

Figur 3b entspricht Figur 3a, in der nur die Bezugszeichen für die einzelnen Bretter Bᵢ bzw. Qᵢ eliminiert wurden. Diese aus der zweiten Längslage LZ geschaffene Querlage Q wird dann ergriffen, die erste Längslage LE auf ihrer Oberseite mit Holzleim bestrichen und die beiden Holzplatten, Längslage L und Querlage Q, werden durch die Vereinigungseinrichtung miteinander verpresst, bis der Holzleim ausgehärtet und die Brettsperrholzplatte hergestellt ist. Beispielsweise kann die Fügestation 200 die Vereinigungseinrichtung aufweisen, die eingerichtet ist, die Querlage Q auf die Längslage L aufzulegen und die übereinanderliegenden Lagen miteinander zu verleimen.

Die Brettsperrholzplatte kann im Grunde genommen aus beliebig vielen Holzpatten aufgebaut sein und/oder bestehen. Vorzugsweise sind es dreilagige und fünflagige Brettsperrholzplatten, aber auch sieben- und neunlagige Brettsperrholzplatten werden produziert. Wichtig ist, dass der Verlauf der Längsachse der Bretter Lᵢ, Qᵢ der aneinander anliegenden Platten sich jeweils kreuzt.

Figur 4 verdeutlicht, dass zunächst in einer Keilzinkenanlage eine gehobelte Lamelle in Mehrfachlänge, also eine Länge, die über die maximale Länge eines Brettes Lᵢ hinausgehen kann, angefördert wird. Eine Abtrenneinrichtung 150, beispielsweise in Gestalt einer Kappsäge trennt dann von dieser gehobelten Lamelle das erste Brett L₁ in der gewünschten Länge ab. Dieses Brett wird dann in Querrichtung R_{Q} transportiert und dann in Längsrichtung R_{L} gegen den Anschlag 1 verschoben. Die linke Darstellung einzelner Bretter zeigt die Reihenfolge, wie sie zum Fügen der Längslage L der Holzplatte notwendig ist.

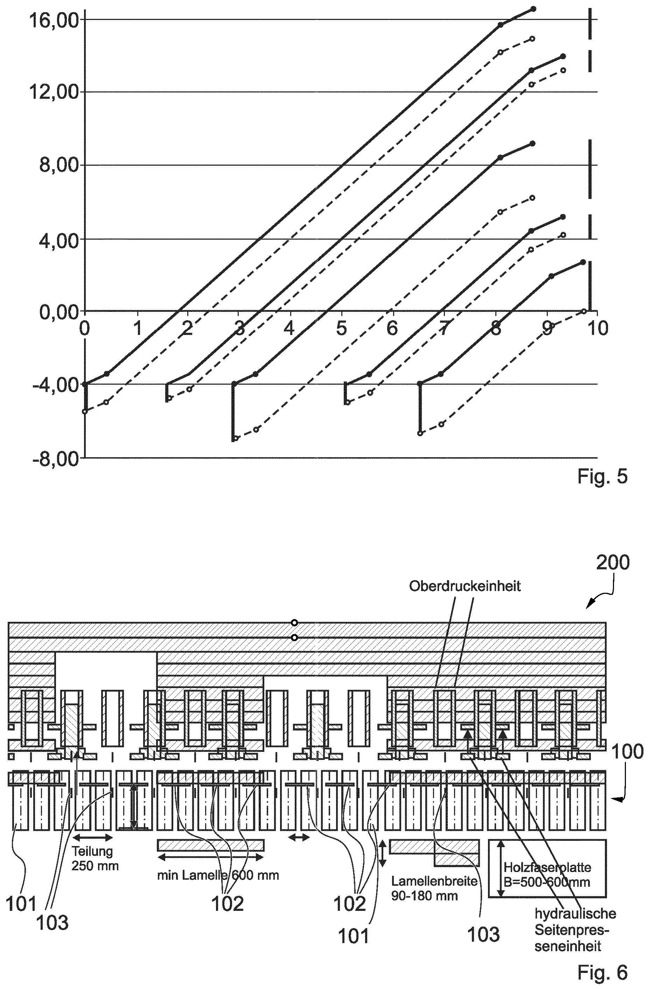

Der Funktionsablauf zum Fügen der Bretter L₁, L₂, ... Lᵢ,... L₂₂ soll nachfolgend anhand der Figur 6 beschrieben werden. Die für eine Fügeebene erforderlichen Bretter liegen in einem hier nicht dargestellten Puffer auf Länge zugeschnitten bereit. Sie werden mit einer nicht dargestellten Mangel in Längsrichtung auf beispielsweise circa 180 m/min beschleunigt und durch eine Seitenbeleimung an einer Kante mit Hotmelt geführt. Danach laufen sie weiter mit beispielsweise nicht aber notwendigerweise 180 m/min über eine beispielsweise, nicht aber notwendigerweise 16,5 m lange Transporteinrichtung 100, beispielsweise in Gestalt einer Rollenbahn mit Rollen 101. Die Rollen 101 sind schräg gestellt und an der Rückseite der Fügestation P ist ein breitenverstellbares Lineal 102 vorgesehen. Die Transporteinrichtung 100 ist in fünfzehn einzeln angetriebene Abschnitte unterteilt, wie Figur 6 schematisch zeigt.

Oberhalb der Transporteinrichtung 100 ist eine auf Brettstärke einstellbare durchgehende Rollenleiste mit Rollen angeordnet. Diese nicht angetriebenen Rollen sorgen für einen sicheren Lauf kurzer und leichter Bauteile.

Das Diagramm in Figur 5 zeigt die Positionierung von fünf Brettern unterschiedlicher Länge und Position. Auf der Ordinatenachse ist der Weg und auf der Abszisse die Zeit aufgetragen. Die jeweils durchgezogene Linie stellt die Vorderkante eines Bretts dar, die darunter verlaufende, gestrichelte Linie ist die hintere Kante eines Bretts, und der vertikale Abstand der Linien entspricht der Länge eines Bretts. Bei beispielsweise 180 m/min Laufgeschwindigkeit sind alle Bretter nach 9,8 s in ihrer Fügeposition. Die Lamellen laufen mit einem Versatz von etwa 1 s (entspricht 3,0 m) zwischen der hinteren Kante des vorlaufenden und der vorderen Kante des folgenden Brettes durch die Fügestation 200.

Alle fünf Anschläge positionieren in der Position der Vorderkante des jeweiligen Bretts über der Transporteinrichtung 100. Dabei steht der letzte Anschlag 1 in Durchlaufrichtung R an der Position des längsten Brettes. Jeder Anschlag hat vor der Stoppposition einen Sensor, der das heranfahrende Brett Lᵢ erkennt. Die Transporteinrichtung 100 ist in mehrere kurze, einzeln angetriebene Abschnitte unterteilt. In Abhängigkeit von der Länge dieses Brettes werden die betreffenden Rollenbahnabschnitte heruntergeregelt, sodass die vordere Kante in den heruntergesteuerten Anschlag fährt und dort exakt gestoppt wird. Alle vor diesem Anschlag positionierten Anschläge 2 bis 5 lassen das erste Brett durch. Ihre Sensoren zählen dabei die Durchläufe. Anschlag 2 lässt ein Brett durchlaufen und stoppt das nachfolgende zweite Brett. Anschlag 3 lässt zwei Bretter durchlaufen und stoppt das dritte Brett usw.

Wie in dem Weg-Zeit-Diagramm nach Figur 5 zu sehen ist, sind zeitgleich mehrere Bretter unterwegs. Bei einer großen Lücke fängt Anschlag 3 sein Brett bevor Anschlag 2 sein Brett fängt. Wenn ein Anschlag deaktiviert wird (für ein durchgehendes Brett, das beispielsweise den Sturz über dem Ausschnitt A₁ bildet), ändert sich die Zählung. Ist Anschlag 4 deaktiviert, lässt Anschlag 5 drei Bretter durch. Ist Anschlag 2 deaktiviert, lässt Anschlag 3 nur ein Brett durch, Anschlag 4 zwei und Anschlag 5 drei.

Sind alle Bretter in Position, werden sie mit einer Schiebeeinrichtung 103, beispielsweise in Gestalt eines Seitenabschiebers seitlich von der Transporteinrichtung 100 abgeschoben. Dieser Seitenabschieber 103 ist kammartig zwischen jeder zweiten Rolle 101 angeordnet (vgl. Figur 6). Beim Zurückfahren senken sich die Seitenabschieber 103 unter die Rollenebene ab. Die folgenden Bretter können dann sofort wieder einlaufen und sie werden an dem auf die Bretterbreite einstellbaren Lineal 102 geführt. Dieses Lineal 102 ist zum Durchlaufen der Seitenabschieber 103 geschlitzt.

Mit der breiten Rollenbahn 100 und dem großen Verstellweg der Seitenführung ist die Fügestation 200 auch zum Seitenfügen von breiteren Holzfaserplatten geeignet. Diese Platten laufen von der gegenüberliegenden Seite in die Fügestation ein und werden mit einem zusätzlichen Schieber (nicht dargestellt) positioniert. Die Seitenführung dient dabei auch zum vollständigen Abschieben der Faserplatte. Dafür sind diese mit kräftigen Stellantrieben ausgerüstet. Die Seitenabschieber 103 bleiben dann in der abgesenkten Position. Bis das nächste Brett einlaufen kann, muss die Seitenführung wieder in Position zurückgefahren werden.

Hochschwenkbare hydraulische Abschieber in enger Teilung von 250 mm übernehmen die seitlich abgeschobenen Bretter und verpressen sie seitlich. Alle 66 Abschieber arbeiten immer über die gesamte Länge der Fügestation 200, unabhängig davon, ob dort ein Brett oder eine Lücke ist. Sie fahren alle bis gegen einen festen Anschlag. Damit ist die hintere Kante aller abgeschobenen und verleimten Bretter immer in einer geraden Linie. Zusätzlich sorgt eine Gleichlaufwelle über die gesamte Länge der Fügestation 200 für einen parallelen Vorlauf aller Schieber. Sie greifen mit Zahnrädern und Zahnstangen unter den Schieber. Diese Schieber haben für maximal 280 mm breite Bretter einen Verfahrweg von 340 mm. Optional können Wegbegrenzer eingeschwenkt werden, die den Verfahrweg für schmale Bretter auf 80 bis 140 mm begrenzt. Damit kann die Taktzeit für das Verdichten und Zurückfahren verkürzt werden.

Nur das unmittelbar vorangehende Brett (Aᵢ, Bᵢ) wird in einer stabilen Klemmvorrichtung von oben auf die Gleitunterlage drückend gehalten und in der Höhe ausgerichtet. Durch den Klemmdruck wird der Gegendruck zum Fügen und Höhenausrichten erzeugt. Die hydraulischen Schieber haben so viel Kraft, dass sie immer bis in ihre Endlage fahren. Die Klemmeinrichtungen sind ebenfalls in einem engeren Raster von 250 mm angeordnet und gesteuert. In einer Lücke der Fügeebene, die einen Ausschnitt A₁, A₂ bildet, dürfen sie keinen Gegendruck ausüben, damit der dahinterliegende Abschnitt frei weiterbewegt werden kann (vgl. Figur 6). Ein Sensor an der Gegendruckeinheit erkennt ob die Position mit einem Brett belegt ist oder nicht. Nur in erstem Fall wird Druck aufgebaut. Das nachfolgende Brett (Lᵢ₊₁, Bᵢ₊₁) schiebt dann das vorangehende Brett (Lᵢ₊₁, Bᵢ₊₁) durch und wird selbst in der Klemmvorrichtung von oben auf die Gleitunterlage drückend gehalten.

Ein Wandelement wird aus mehreren miteinander verklebten Längslagen L und Querlagen Q zusammengesetzt. Die beiden äußeren Platten sind in der Regel Querlagen. Um gute Dämmeigenschaften zu erzielen, können in den Lagen, die als Zwischenlagen verwendet werden, zwischen die einzelnen Bretter Dämmplatten (beispielsweise aus Holzfasern) eingelegt werden.

Die Dämmplatten können breiter sein als die Bretter für die Längslagen Lᵢ oder die Querlagen Qᵢ. Vorteilhaft ist es dabei, wenn die mit Dämmplatten hergestellten Platten an ihren Außenkanten von Vollholz begrenzt werden. Die Aufteilung beim Legen der Längslagen L bzw. Querlagen Q ist dann entsprechend zu berücksichtigen. In der Fügestation werden dann wechselweise Holzbretter und Faserplatten seitlich miteinander verleimt.

Die Querlagenplatte wird zunächst in diverse Rechtecke unterteilt, A, B, C, .... Dabei darf die Breite dieser Rechtecke (quer zur Laufrichtung der Bretter Bᵢ) nicht größer als die maximale Breite der Seitenfügestation sein. In dem Fall würde das Rechteck A in mehrere Abschnitte A1, A2, .. An unterteilt.

Diese Rechtecke werden um 90° gedreht und nebeneinander gelegt, dabei ergibt sich die Gesamtlänge des ersten Brettes B₁. Die erforderlichen Längen und Positionen der Bretter B₂ bis B₁₁ werden dann entsprechend errechnet (Fig. 3a).

### Bezugszeichenliste

| | | | |
|---|---|---|---|
| 100 | Transporteinrichtung, Rollenbahn | Q | Querlage |
| | | Q₁, Q₂, Q₃, ... Qi,...Q₂₃, Q₂₄, Q₂₅ | Brett |
| 101 | Rollen | | |
| 102 | Lineal | R_{L} | Längsrichtung |
| 103 | Schiebeeinrichtung, Seitenabschieber | R_{Q} | Querrichtung |
| | | A, B, C, D, E,F | Teilplatten |
| 104 | Anschlag | | |
| 105 | Anschlag | | |
| 150 | Abtrenneinrichtung, Kappsäge | | |
| 160 | Beleimeinrichtung | | |
| 170 | Dreheinrichtung180 Steuereinrichtung | | |
| 200 | Fügestation | | |
| A₁, A₂ | Ausschnitt | | |
| B₁, B₂, ... Bᵢ,... B₁₀, B₁₁ | Brett | | |
| L₁, L₂, ... Lᵢ ... L₁₀, L₁₁ | Brett | | |
| L | Längslage | | |
| LE | erste Längslage | | |
| LZ | zweite Längslage | | |
| I, II, III, IV, ... X | Reihe | | |

## Patentansprüche

1. Verfahren zum Herstellen von mit Ausschnitten (A₁, A₂,...) versehenen Brettsperrholzplatten, die aufgebaut sind aus mindestens einer Längslage (L), in der die Bretter (L₁, L₂, L₃, ... L₂₀, LL₂₁, L₂₂) zu einander in Reihen (I, II, III, IV, V, VI, VII, VIII, IX, X) parallel liegend in einer Längsrichtung (R_{L}) angeordnet sind, und mindestens einer Querlage (Q), in der die Bretter (Q₁, Q₂, Q₃, ...Qᵢ, ..., Q₂₆, Q₂₇, Q₂₈) zu einander in Reihen (1, 2, 3, ... 26, 27, 28) parallel liegend in einer Querrichtung (R_{Q}) angeordnet sind, wobei
a) in einem ersten Arbeitsgang zur Erzeugung der Ausschnitte (A₁, A₂, ...) in der Längslage (LE) die Bretter in den Reihen (IV, V, VI, VII, VIII, IX, X), in denen sich Ausschnitte (A₁, A₂, ...) befinden, in Einzelbretter (L₄, L₅, L₆, ... L₂₀, L₂₁, L₂₂) aufgeteilt werden, und anschließend zu einer ersten Längslage (L1) gelegt und an ihren Längsseiten miteinander verleimt werden, **dadurch gekennzeichnet, dass**
b) sowohl die Längslage (L) als auch die Querlage (Q) in derselben oder dergleichen Fügestation (200) hergestellt werden,
c) in einem zweiten Arbeitsgang zunächst eine zweite Längslage (LZ) aus einer Mehrzahl von Einzelbrettern (B₁, B₂, ..) in mehreren Reihen (I, II, III, IV, V, VI) gebildet wird, wobei zur Berücksichtigung der Ausschnitte (A₁, A₂,...) in einigen Reihen (IV, V, VI), Einzelbretter (B₄, B₅, ... Bᵢ, ... B₁₀, B₁₁) gelegt und an ihren Längsseiten miteinander verleimt werden, wodurch die zweite Längslage (LZ) in Querrichtung R_{Q} abgestuft ausgebildet wird, wobei die Fläche der zweiten Längslage (LZ) der Fläche der ersten Längslage (LE) ohne die Ausschnitte (A₁, A₂,...) entspricht,
d) in einem dritten Arbeitsgang die zweite Längslage (LZ) in mindestens zwei Teilplatten (A, B, C, D, E, F) aufgeteilt wird und die aufgeteilten Teilplatten (A, B, C, D, E, F) um 90° gedreht werden,
e) in einem vierten Arbeitsgang die um 90° gedrehten Teilplatten (A, B, C, D, E, F) zu der Querlage (Q) aneinandergelegt und so miteinander verbunden, dass auch hier die Ausschnitte (A₁, A₂, ...) gebildet werden,
f) in einem abschließenden Arbeitsgang die Querlage Q auf die Längslage L aufgelegt und die übereinanderliegenden Lagen miteinander verleimt werden.

2. Verfahren nach Anspruch 1, **dadurch gekennzeichnet, dass** zwischen den Brettern (Qi) für die Querlage (Q) jeweils eine Dämmplatte angeordnet wird.

3. Verfahren nach Anspruch 2, **dadurch gekennzeichnet, dass** beim Fügen der Längslage, die später als Querlage (Q) verwendet wird, die in Querrichtung (R) verlaufenden Seitenränder von einem Brett begrenzt werden.

4. Verfahren nach einem der vorstehenden Ansprüche, **dadurch**
**gekennzeichnet, dass** in einer Reihe maximal fünf Einzelbretter vorgesehen sind.

5. Verfahren nach einem der vorstehenden Ansprüche, **dadurch**
**gekennzeichnet, dass** die Bretter (L₁, L₂, L₃, ... L₂₀, L₂₁, L₂₂; B₄, B₅, ...Bᵢ, ... B₁₀, B₁₁) in Längsrichtung (R_{L}) an die Fügestation (200) antransportiert und über verstellbare Anschläge positioniert werden und nach der Positionierung in Querrichtung (R_{Q}) in die Fügestation (200) eingeschoben werden.

6. Verfahren nach einem der vorstehenden Ansprüche, **dadurch**
**gekennzeichnet, dass** die Brettsperrholzplatten (LE, LZ), bevor sie weiterbearbeitet werden, an ihren Seitenrändern besäumt werden, um sie zu kalibrieren.

7. Verfahren nach einem der Ansprüche 3 bis 6, **dadurch gekennzeichnet, dass** die Dämmplatten breiter sind als die Bretter (Bᵢ, Lᵢ, Qᵢ).

8. Holzplattenherstellvorrichtung zum Herstellen von mit Ausschnitten (A₁, A₂, ...) versehenen Brettsperrholzplatten, die aufgebaut ist aus mindestens einer Längslage (L), in der die Bretter (L₁, L₂, L₃, ... L₂₀, L₂₁, L₂₂) zu einander in Reihen (I, II, III, IV, V, VI, VII, VIII, IX, X) parallel liegend in einer Längsrichtung angeordnet sind, und mindestens einer Querlage (Q), in der die Bretter (Q₁, Q₂, Q₃, ...Qᵢ, ..., Q₂₆, Q₂₇, Q₂₈) zu einander in Reihen (1, 2, 3, ... 26, 27, 28) parallel liegend in einer Querrichtung (R_{Q}) angeordnet sind, mit
a) einer Abtrenneinrichtung (150), die eingerichtet ist zum Aufteilen der Bretter in den Reihen (IV, V, VI, VII, VIII, IX, X), in denen sich Ausschnitte (A₁, A₂, ...) befinden, in Einzelbretter (L₄, L₅, L₆, ... L₂₀, L₂₁, L₂₂) zur Erzeugung der Ausschnitte (A₁, A₂, ...) in der Längslage (LE),
b) einer Beleimeinrichtung (160), die eingerichtet ist zum Beleimen der Längsseiten der Bretter und
c) einer Fügestation (200) zum Legen und Verpressen der Bretter zu einer ersten Längslage,
d) wobei die Abtrenneinrichtung (150) eingerichtet ist zum Aufteilen einer in Querrichtung R_{Q} abgestuften zweiten Längslage (LZ), deren Fläche der ersten Längslage (LE) ohne die Ausschnitte (A₁, A₂, ...) entspricht, in mindestens zwei Teilplatten (A, B, C, D, E, F),
e) wobei die Holzplattenherstellvorrichtung eine Dreheinrichtung (170) aufweist, die eingerichtet ist zum Drehen der aufgeteilten Teilplatten (A, B, C, D, E, F) um 90°,
f) wobei die Fügestation (200) eingerichtet ist, die um 90° gedrehten Teilplatten (A, B, C, D, E, F) zu der Querlage (Q) aneinanderzulegen und so miteinander zu verbinden, dass auch hier die Ausschnitte (A₁, A₂, ...) gebildet werden, und
g) wobei die Holzplattenherstellvorrichtung eine Vereinigungseinrichtung aufweist, die eingerichtet ist, die Querlage Q auf die Längslage L aufzulegen und die übereinanderliegenden Lagen miteinander zu verleimen.

9. Holzplattenherstellvorrichtung nach Anspruch 8, **gekennzeichnet durch** eine Vereinigungseinrichtung, die eingerichtet ist, die Querlage Q auf die Längslage L aufzulegen und die übereinanderliegenden Lagen miteinander zu verleimen.

10. Holzplattenherstellvorrichtung nach Ansprüche 9, **dadurch gekennzeichnet, dass** die Fügestation (200) die Vereinigungseinrichtung aufweist.

11. Holzplattenherstellvorrichtung nach einer der Ansprüche 8 bis 10,
**gekennzeichnet durch** eine Längslagenbildungseinrichtung, die eingerichtet ist zum Bilden der zweiten Längslage (LZ) aus einer Mehrzahl von Einzelbrettern (B₁, B₂, ..) in mehreren Reihen (I, II, III, IV, V, VI) zur Erzeugung der Ausschnitte (A₁, A₂, ...), wobei zur Berücksichtigung der Ausschnitte (A₁, A₂, ...) in einigen Reihen (IV, V, VI) Einzelbretter (B₄, B₅, ... Bᵢ, ... B₁₀, B₁₁) gelegt und an ihren Längsseiten miteinander verleimt werden, wodurch die zweite Längslage (LZ) in Querrichtung R_{Q} abgestuft ausgebildet wird, wobei die Fläche der zweiten Längslage (LZ) der Fläche der ersten Längslage (LE) ohne die Ausschnitte (A₁, A₂, ...) entspricht.

12. Holzplattenherstellvorrichtung nach einem der Ansprüche 8 bis 11,
**gekennzeichnet durch** eine Transporteinrichtung (100), die eingerichtet ist zum Antransportieren der Bretter (L₁, L₂, L₃, ... L₂₀, L₂₁, L₂₂; B₄, B₅, ...Bᵢ, ... B₁₀, B₁₁) in Längsrichtung (R_{L}) an die Fügestation (200) und verstellbare Anschläge (104, 105) zum Positionieren der Bretter (L₁, L₂, L₃, ... L₂₀, L₂₁, L₂₂; B₄, B₅, ...Bᵢ, ... B₁₀, B₁₁) aufweist, und eine Schiebeeinrichtung (103), die eingerichtet ist zum Einschieben der Bretter (L₁, L₂, L₃, ... L₂₀, L₂₁, L₂₂; B₄, B₅, ...Bᵢ, ... B₁₀, B₁₁) in Querrichtung (R_{Q}) in die Fügestation (200) nach der Positionierung.

13. Holzplattenherstellvorrichtung nach einem der Ansprüche 8 bis 12,
**gekennzeichnet durch** eine Besäumeinrichtung, die eingerichtet ist zum Besäumen der Brettsperrholzplatten (LE, LZ), bevor sie weiterbearbeitet werden, um sie zu kalibrieren.

14. Holzplattenherstellvorrichtung nach einem der Ansprüche 8 bis 13, **dadurch gekennzeichnet, dass** die Fügestation (200) dazu eingerichtet ist, zwischen den Brettern (Qi) für die Querlage (Q) jeweils eine Dämmplatte anzuordnen.

15. Holzplattenherstellvorrichtung nach einem der Ansprüche 8 bis 14,
**gekennzeichnet durch** eine Steuereinrichtung (180), die eingerichtet ist zum Ansteuern der Abtrenneinrichtung (150), der Beleimeinrichtung (160), der Fügestation (200), der Dreheinrichtung (170) und der Vereinigungseinrichtung, sodass die Holzplattenherstellvorrichtung automatisch ein Verfahren nach einem der Ansprüche 1 bis 7 durchführt.

## Claims

1. A method for producing cross-laminated timber panels with cutouts (A₁, A₂,...) that are constructed of at least one longitudinal layer (L), in which the boards (L₁, L₂, L₃, ... L₂₀, LL₂₁, L₂₂) are arranged in rows (I, II, III, IV, V, VI, VII, VIII, IX, X) parallel to each other in a longitudinal direction (R_{L}), and at least one transverse layer (Q), in which the boards (Q₁, Q₂, Q₃, ...Qᵢ, ..., Q₂₆, Q₂₇, Q₂₈) are arranged in rows (1, 2, 3, ... 26, 27, 28) parallel to each other in a transverse direction (R_{Q}), wherein
a) in a first step, the boards in rows (IV, V, VI, VII, VIII, IX, X) in which the cutouts (A₁, A₂, ...) are located are divided into individual boards (L₄, L₅, L₆, ... L₂₀, L₂₁, L₂₂) to create the cutouts (A₁, A₂, ...) in the longitudinal layer (LE) and then laid to form a first longitudinal layer (L1) and glued together on their longitudinal sides, **characterized in that**
b) both the longitudinal layer (L) and the transverse layer (Q) are produced in the same joining station (200),
c) in a second step, a second longitudinal layer (LZ) is first formed from a plurality of individual boards (B₁, B₂, ..) in multiple rows (I, II, III, IV, V, VI), wherein individual boards (B₄, B₅, ...Bᵢ, ... B₁₀, B₁₁) are laid in several rows (IV, V, VI) and glued together on their longitudinal sides to allow for the cutouts (A₁, A₂,...), the second longitudinal layer (LZ) being stepped in the transverse direction R_{Q}, wherein the area of the second longitudinal layer (LZ) corresponds to the area of the first longitudinal layer (LE) without the cutouts (A₁, A₂,...),
d) in a third step, the second longitudinal layer (LZ) is divided into at least two partial panels (A, B, C, D, E, F) and the divided partial panels (A, B, C, D, E, F) are rotated by 90°,
e) in a fourth step, the partial panels (A, B, C, D, E, F) rotated by 90° are laid together to form the transverse layer (Q) and joined together in such a way that the cutouts (A₁, A₂, ...) are also formed here,
f) in a final step, the transverse layer Q is laid on the longitudinal layer L and the overlapping layers are glued together.

2. The method according to claim 1, **characterized in that** an insulating panel is arranged between each of the boards (Qi) for the transverse layer (Q).

3. The method according to claim 2, **characterized in that** when joining the longitudinal layer, which is later used as the transverse layer (Q), the lateral edges running in the transverse direction (R) are bounded by a board.

4. The method according to one of the preceding claims, **characterized in that** one row contains a maximum of five individual boards.

5. The method according to one of the preceding claims, **characterized in that** the boards (L₁, L₂, L₃, ... L₂₀, L₂₁, L₂₂; B₄, B₅, ...Bᵢ, ... B₁₀, B₁₁) are transported to the joining station (200) in the longitudinal direction (R_{L}) and positioned via adjustable end stops and, following positioning, are introduced into the joining station (200) in the transverse direction (R_{Q}).

6. The method according to one of the preceding claims, **characterized in that** the cross-laminated timber panels (LE, LZ) are trimmed at their lateral edges before further processing so as to calibrate them.

7. The method according to one of the claims 3 to 6, **characterized in that** the insulating panels are wider than the boards (Bᵢ, Lᵢ, Qᵢ).

8. A wooden panel production device for producing cross-laminated timber panels with cutouts (A₁, A₂,...) that are constructed of at least one longitudinal layer (L), in which the boards (L₁, L₂, L₃, ... L₂₀, LL₂₁, L₂₂) are arranged in rows (I, II, III, IV, V, VI, VII, VIII, IX, X) parallel to each other in a longitudinal direction, and at least one transverse layer (Q), in which the boards (Q₁, Q₂, Q₃, ...Qᵢ, ..., Q₂₆, Q₂₇, Q₂₈) are arranged in rows (1, 2, 3, ... 26, 27, 28) parallel to each other in a transverse direction (R_{Q}), with
a) a cut-off device (150) that is configured to divide the boards in rows (IV, V, VI, VII, VIII, IX, X), in which the cutouts (A₁, A₂, ...) are located, into individual boards (L₄, L₅, L₆, ... L₂₀, L₂₁, L₂₂) to produce the cutouts (A₁, A₂, ...) in the longitudinal layer (LE),
b) a glueing device (160) that is configured to glue the longitudinal sides of the boards, and
c) a joining station (200) for laying and pressing the boards to create a first longitudinal layer,
d) wherein the cut-off device (150) is configured to divide a second longitudinal layer (LZ) stepped in the transverse direction R_{Q}, the area of which corresponds to the first longitudinal layer (LE) without the cutouts (A₁, A₂, ...), into at least two partial panels (A, B, C, D, E, F),
e) wherein the wooden panel production device comprises a rotation device (170), which is configured to rotate the divided partial panels (A, B, C, D, E, F) by 90°,
f) wherein the joining station (200) is configured to lay the partial panels (A, B, C, D, E, F) rotated by 90° together to form the transverse layer (Q) and join them together in such a way that the cutouts (A₁, A₂, ...) are also formed here, and
g) wherein the wooden panel production device has a joining device which is configured to place the transverse layer Q on the longitudinal layer L and to glue the overlapping layers together.

9. The wooden panel production device according to claim 8, **characterized by** a joining device that is configured to place the transverse layer Q on the longitudinal layer L and to glue the overlapping layers together.

10. The wooden panel production device according to claim 9, **characterized in that** the joining station (200) comprises the joining device.

11. The wooden panel production device according to one of the claims 8 to 10, **characterized by** a longitudinal layer formation device, which is configured to form the second longitudinal layer (LZ) from a plurality of individual boards (B₁, B₂, ..) in multiple rows (I, II, III, IV, V, VI) in order to create the cutouts (A₁, A₂, ...), wherein individual boards (B₄, B₅, ...Bᵢ, ... B₁₀, B₁₁) are laid in several rows (IV, V, VI) and glued together on their longitudinal sides to allow for the cutouts (A₁, A₂,...), the second longitudinal layer (LZ) being stepped in the transverse direction R_{Q}, wherein the area of the second longitudinal layer (LZ) corresponds to the area of the first longitudinal layer (LE) without the cutouts (A₁, A₂,...).

12. The wooden panel production device according to one of the claims 8 to 11, **characterized by** a transport device (100), which is configured to transport the boards (L₁, L₂, L₃, ... L₂₀, L₂₁, L₂₂; B₄, B₅, ...Bᵢ, ... B₁₀, B₁₁) to the joining station (200) in the longitudinal direction (R_{L}), and comprises adjustable end stops (104, 105) for positioning the boards (L₁, L₂, L₃, ... L₂₀, L₂₁, L₂₂; B₄, B₅, ...Bᵢ, ... B₁₀, B₁₁), and by a pushing device (103), which is configured to introduce the boards (L₁, L₂, L₃, ... L₂₀, L₂₁, L₂₂; B₄, B₅, ...Bᵢ, ... B₁₀, B₁₁) into the joining station (200) in the transverse direction (R_{Q}) after positioning.

13. The wooden panel production device according to one of the claims 8 to 12, **characterized by** a trimming device, which is configured to trim the cross-laminated timber panels (LE, LZ) before further processing so as to calibrate them.

14. The wooden panel production device according to one of the claims 8 to 13, **characterized in that** the joining station (200) is configured to arrange an insulating panel between each of the boards (Qi) for the transverse layer (Q).

15. The wooden panel production device according to one of the claims 8 to 14, **characterized by** a separating device (180) that is configured to control the glueing device (160), the joining station (200), the rotation device (170) and the joining device so that the wooden panel production device automatically conducts a method according to one of the claims 1 to 7.

## Revendications

1. Procédé de fabrication de panneaux en bois lamellé croisé pourvus de découpes (A₁, A₂,... ), qui sont constitués d'au moins une couche longitudinale (L) dans laquelle les planches (L₁, L₂, L₃, ... L₂₀, L₂₁, L₂₂) sont disposées parallèlement les unes aux autres en rangées (I, II, III, IV, V, VI, VII, VIII, IX, X) dans une direction longitudinale (R_{L}), et d'au moins une couche transversale (Q) dans laquelle les planches (Q₁, Q₂, Q₃, ... Qᵢ, ..., Q₂₆, Q₂₇, Q₂₈) sont disposées parallèlement les unes aux autres en rangées (1, 2, 3, ... 26, 27, 28) dans une direction transversale (Ra),dans lequel
a) dans une première étape de travail pour créer les découpes (A₁, A₂, ...) dans la couche longitudinale (LE), les planches disposées dans les rangées (IV, V, VI, VII, VIII, IX, X) dans lesquelles se trouvent des découpes (A₁, A₂, ...) sont divisées en planches individuelles (L₄, L₅, L₆, ... L₂₀, L₂₁, L₂₂), puis sont placées pour former une première couche longitudinale (L1) et sont collées entre elles sur leurs côtés longitudinaux, **caractérisé en ce que**
b) tant la couche longitudinale (L) que la couche transversale (Q) sont réalisées dans la même station d'assemblage ou dans des stations d'assemblage (200) identiques,
c) dans une deuxième étape de travail, une deuxième couche longitudinale (LZ) est d'abord formée à partir d'une pluralité de planches individuelles (B₁, B₂, ...) disposées en plusieurs rangées (I, II, III, IV, V, VI), sachant que pour tenir compte des découpes (A₁, A₂,...) dans certaines rangées (IV, V, VI), des planches individuelles (B₄, B₅, ...Bᵢ, ... B₁₀, B₁₁) sont placées et collées entre elles sur leurs côtés longitudinaux, ce qui permet de former la deuxième couche longitudinale (LZ) de manière étagée dans la direction transversale R_{Q}, la surface de la deuxième couche longitudinale (LZ) correspondant à la surface de la première couche longitudinale (LE) sans les découpes (A₁, A₂,... ),
d) dans une troisième étape de travail, la deuxième couche longitudinale (LZ) est divisée en au moins deux panneaux partiels (A, B, C, D, E, F), et les panneaux partiels divisés (A, B, C, D, E, F) sont tournés de 90°,
e) dans une quatrième étape de travail, les panneaux partiels (A, B, C, D, E, F) tournés de 90° sont placés les uns contre les autres pour former la couche transversale (Q) et sont reliés entre eux de manière à créer ici également les découpes (A₁, A₂, ...),
f) dans une dernière étape de travail, la couche transversale Q est placée sur la couche longitudinale L, et les couches superposées sont collées entre elles.

2. Procédé selon la revendication 1, **caractérisé en ce qu'**un panneau isolant respectif est disposé entre les planches (Qᵢ) pour la couche transversale (Q).

3. Procédé selon la revendication 2, **caractérisé en ce que,** lors de l'assemblage de la couche longitudinale qui sera ensuite utilisée comme couche transversale (Q), les bords latéraux s'étendant dans la direction transversale (R) sont délimités par une planche.

4. Procédé selon l'une des revendications précédentes, **caractérisé en ce qu'**il est prévu au maximum cinq planches individuelles dans une rangée.

5. Procédé selon l'une des revendications précédentes, **caractérisé en ce que** les planches (L₁, L₂, L₃, ... L₂₀, L₂₁, L₂₂; B₄, B₅, ... Bᵢ, ... B₁₀, B₁₁) sont transportées en direction longitudinale (R_{L}) vers la station d'assemblage (200) et sont positionnées à l'aide de butées réglables, puis, après positionnement, sont insérées en direction transversale (R_{Q}) dans la station d'assemblage (200).

6. Procédé selon l'une des revendications précédentes, **caractérisé en ce que** les panneaux en bois lamellé croisé (LE, LZ) sont délignés sur leurs bords latéraux, avant d'être soumis à un traitement ultérieur, afin de les calibrer.

7. Procédé selon l'une des revendications 3 à 6, **caractérisé en ce que** les panneaux isolants sont plus larges que les planches (Bᵢ, Lᵢ, Qᵢ).

8. Dispositif de fabrication de panneaux en bois pour fabriquer des panneaux en bois lamellé croisé pourvus de découpes (A₁, A₂, ...), qui sont constitués d'au moins une couche longitudinale (L) dans laquelle les planches (L₁, L₂, L₃, ... L₂₀, L₂₁, L₂₂) sont disposées parallèlement les unes aux autres en rangées (I, II, III, IV, V, VI, VII, VIII, IX, X) dans une direction longitudinale, et d'au moins une couche transversale (Q) dans laquelle les planches (Q₁, Q₂, Q₃, ... Qᵢ, ..., Q₂₆, Q₂₇, Q₂₈) sont disposées parallèlement les unes aux autres en rangées (1, 2, 3, ... 26, 27, 28) dans une direction transversale (R_{Q}), comprenant
a) un moyen de séparation (150) conçu pour diviser les planches dans les rangées (IV, V, VI, VII, VIII, IX, X), dans lesquelles se trouvent des découpes (A₁, A₂, ...), en planches individuelles (L₄, L₅, L₆, ... L₂₀, L₂₁, L₂₂) afin de créer les découpes (A₁, A₂, ...) dans la couche longitudinale (LE),
b) un moyen d'encollage (160) conçu pour encoller les côtés longitudinaux des planches, et
c) une station d'assemblage (200) pour placer et presser les planches afin de former une première couche longitudinale,
d) le moyen de séparation (150) étant conçu pour diviser une deuxième couche longitudinale (LZ) étagée en direction transversale R_{Q}, dont la surface correspond à la première couche longitudinale (LE) sans les découpes (A₁, A₂, ...), en au moins deux panneaux partiels (A, B, C, D, E, F),
e) le dispositif de fabrication de panneaux en bois comportant un moyen de rotation (170) conçu pour faire tourner les panneaux partiels divisés (A, B, C, D, E, F) de 90°,
f) la station d'assemblage (200) étant conçue pour placer les panneaux partiels (A, B, C, D, E, F), tournés de 90°, les uns contre les autres pour former dans la couche transversale (Q) et pour les relier entre eux de manière à créer ici également les découpes (A₁, A₂, ...), et
g) le dispositif de fabrication de panneaux en bois comportant un moyen de réunion conçu pour placer la couche transversale Q sur la couche longitudinale L et pour coller entre elles les couches superposées.

9. Dispositif de fabrication de panneaux en bois selon la revendication 8, **caractérisé par** un moyen de réunion conçu pour placer la couche transversale Q sur la couche longitudinale L et pour coller entre elles les couches superposées.

10. Dispositif de fabrication de panneaux en bois selon la revendication 9, **caractérisé en ce que** la station d'assemblage (200) comprend le moyen de réunion.

11. Dispositif de fabrication de panneaux en bois selon l'une des revendications 8 à 10, **caractérisé par** un moyen de formation de couche longitudinale conçu pour former la deuxième couche longitudinale (LZ) à partir d'une pluralité de planches individuelles (B₁, B₂, ...) disposées en plusieurs rangées (I, II, III, IV, V, VI) pour créer les découpes (A₁, A₂, ...), sachant que pour tenir compte des découpes (A₁, A₂,...) dans certaines rangées (IV, V, VI), des planches individuelles (B₄, B₅, ...Bᵢ, ... B₁₀, B₁₁) sont placées et collées entre elles sur leurs côtés longitudinaux, ce qui permet de former la deuxième couche longitudinale (LZ) de manière étagée dans la direction transversale R_{Q}, la surface de la deuxième couche longitudinale (LZ) correspondant à la surface de la première couche longitudinale (LE) sans les découpes (A₁, A₂, ...).

12. Dispositif de fabrication de panneaux en bois selon l'une des revendications 8 à 11, **caractérisé par** un moyen de transport (100) qui est conçu pour transporter les planches (L₁, L₂, L₃, ... L₂₀, L₂₁, L₂₂ ; B₄, B₅, ... Bᵢ, ... B₁₀, B₁₁) en direction longitudinale (R_{L}) vers la station d'assemblage (200) et qui comprend des butées réglables (104, 105) pour positionner les planches (L₁, L₂, L₃, ... L₂₀, L₂₁, L₂₂ ; B₄, B₅, ... Bᵢ, ... B₁₀, B₁₁), et par un moyen d'insertion (103) qui est conçu pour insérer les planches (L₁, L₂, L₃, ... L₂₀, L₂₁, L₂₂ ; B₄, B₅, ... Bᵢ, ... B₁₀, B₁₁) en direction transversale (R_{Q}) dans la station d'assemblage (200), après le positionnement.

13. Dispositif de fabrication de panneaux en bois selon l'une des revendications 8 à 12, **caractérisé par** un moyen de délignage conçu pour déligner les panneaux en bois lamellé croisé (LE, LZ) avant qu'ils ne soient soumis à un traitement ultérieur, afin de les calibrer.

14. Dispositif de fabrication de panneaux en bois selon l'une des revendications 8 à 13, **caractérisé en ce que** la station d'assemblage (200) est conçue pour disposer un panneau isolant respectif entre les planches (Qi) pour la couche transversale (Q).

15. Dispositif de fabrication de panneaux en bois selon l'une des revendications 8 à 14, **caractérisé par** un moyen de commande (180) conçu pour commander le moyen de séparation (150), le moyen d'encollage (160), la station d'assemblage (200), le moyen de rotation (170) et le moyen de réunion, de sorte que le dispositif de fabrication de panneaux en bois exécute automatiquement un procédé selon l'une des revendications 1 à 7.
